# EUROPÄISCHE PATENTANMELDUNG

(11) **EP 1 722 083 A2**
(43) Veröffentlichungstag der Anmeldung: **15.11.2006**
(21) Anmeldenummer: 06004099.5
(22) Anmeldetag: 01.03.2006
(51) Int. Cl.: F01P 11/02, F01M 11/04, F16N 31/00

(54) **Serviceeinheit zur Betriebsmittelergänzung**

(30) Priorität: 10.05.2005 DE 102005021456
(71) Anmelder: Dr.Ing. h.c. F. Porsche Aktiengesellschaft, 70435 Stuttgart (DE)
(72) Erfinder: Erich, Bernd, 71336 Waiblingen (DE)

(57) **Zusammenfassung**

Die Erfindung betrifft eine Serviceeinheit (1) zur Betriebsmittelergänzung an einem Fahrzeug mit einer Antriebsmaschine, mit zumindest einem Befüllstutzen (2, 3) und einer den Befüllstutzen (2, 3) zumindest teilweise umgebenden Auffangschale (4).

Für eine komfortable Betriebsmittelergänzung ist vorgesehen, dass an der Auffangschale (4) eine Tropfschutzabdeckung (16) schwenkbar angebracht ist, welche Tropfschutzabdeckung (16) aus einer innerhalb der Auffangschale (4) liegenden Ruhestellung (RS) in eine zumindest teilweise aus der Auffangschale (4) herausgeschwenkte Schutzstellung (ST) verlagerbar ist.

## Beschreibung

Bei der Erfindung wird ausgegangen von einer Serviceeinheit zur Betriebsmittelergänzung, gemäß Oberbegriff des Anspruchs 1.

Eine gattungsgemäße Serviceeinheit zur Betriebsmittelergänzung an einem Fahrzeug mit einer Antriebsmaschine kann der nachveröffentlichten DE 103 59 767 entnommen werden. Diese Serviceeinheit ist vorzugsweise innerhalb des Fahrzeugs, beispielsweise im Gepäckraum, angeordnet und weist für die Betriebsmittelergänzung einen Befüllstutzen auf, beispielsweise für Kühlflüssigkeit der Antriebsmaschine, sowie eine den Befüllstutzen zumindest teilweise umgebende Auffangschale, die dazu dient, bei der Betriebsmittelergänzung verschüttete Flüssigkeit aufzufangen und vorzugsweise über einen Ablauf abzuleiten.

Aus der US 58 33 528 A ist ferner eine über eine Tür zugängliche Serviceeinheit an einer Arbeitsmaschine bekannt, die mehrere Befüllstutzen für Betriebsmittel besitzt. Eine Auffangschale für verschüttete Flüssigkeiten ist dort jedoch nicht beschrieben.

Aufgabe der Erfindung ist es, eine Serviceeinheit zur Betriebsmittelergänzung anzugeben, mit der die Betriebsmittelergänzung vereinfacht werden kann.

Gelöst wird diese Aufgabe mit einer Serviceeinheit, die die in Anspruch 1 genannten Merkmale aufweist. Weiterbildungen der Erfindung sind in den Unteransprüchen angegeben.

Die mit der Erfindung hauptsächlich erzielten Vorteile sind darin zu sehen, dass bei einer über die Serviceeinheit durchgeführten Betriebsmittelergänzung eventuell verschüttete Flüssigkeit besser aufgefangen und in die Auffangschale abgeleitet werden kann. Die die Auffangschale bzw. Serviceeinheit umgebenden Fahrzeugbereiche werden somit in einfacher Art und Weise vor Verschmutzung geschützt. Insbesondere kann diese erfindungsgemäße Serviceeinheit bei einem Kraftfahrzeug verwendet werden, bei dem die Serviceeinheit im Fahrzeuginnenraum bzw. Gepäckraum angeordnet ist. Eine Verschmutzung der die Serviceeinheit umgebenden Innenverkleidungsteile des Kraftfahrzeugs kann somit in den meisten Fällen verhindert werden.

Besonders bevorzugt wird die Serviceschale in einem Fahrzeuginnenraum bzw. Gepäckraum eines Kraftfahrzeugs angeordnet, dessen Antriebsmaschine in so genannter Mittel- oder Heckmotoranordnung in das Fahrzeug eingesetzt ist. Entsprechend kann die Serviceeinheit im Fahrzeuginnenraum bzw. hinteren Gepäckraum und benachbart zur Antriebsmaschine angeordnet werden.

Nach einer in Anspruch 2 angegebenen Ausführungsform kann in vorteilhafter Weise der optische Eindruck der Serviceeinheit insbesondere dann verbessert werden, wenn die Serviceeinheit im Fahrzeuginnenraum bzw. Gepäckraum angeordnet ist.

Hinsichtlich einer komfortablen Bedienung wird ein in Anspruch 3 angeführtes Ausführungsbeispiel bevorzugt.

Nach einer in Anspruch 4 angegebenen Weiterbildung der Erfindung ist vorteilhaft, dass die Tropfschutzabdeckung insbesondere in ihrer Ruhestellung in der Auffangschale platziert werden kann.

Mit den in Anspruch 5 genannten Merkmalen wird die Tropfschutzabdeckung an die vorhandene innere Randkontur der Schale formgenau angepasst.

Eine einfache Anlenkung der Tropfschutzabdeckung wird mit den Merkmalen des Anspruchs 6 erreicht.

Gemäß einer in Anspruch 7 angegebenen Ausführungsvariante kann die Tropfschutzabdeckung auf besonders einfache Art und Weise selbsttätig von der Ruhestelle in die Schutzstellung verlagert werden. Für die Vorspannung der Tropfschutzabdeckung in Ausstellrichtung wird in besonders bevorzugter Ausführungsform eine Feder verwendet, die beispielsweise als um die Schwenkachse der Tropfschutzabdeckung angeordnete Schenkelfeder oder ähnliches ausgeführt ist.

Nach einem in Anspruch 8 angegebenen Ausführungsbeispiel, welches besonders bevorzugt ist, kann die Serviceeinheit an einer etwa aufrechten Fahrzeugwand, wie beispielsweise Trennwand zum Motorraum oder ähnliches, angeordnet werden, in welchem Motorraum die Antriebsmaschine angeordnet ist.

Die Erfindung wird nachfolgend anhand eines Ausführungsbeispiels mit Bezug auf die Zeichnung näher erläutert. Es zeigen:
- Fig. 1: eine Perspektive einer Serviceeinheit mit einer innerhalb der Auffangschale angeordneten Befüllstutzen und einer Tropfschutzabdeckung,
- Fig. 2: entlang der Linie II-II in Fig. 1 einen Schnitt durch die Serviceeinheit mit der Tropfschutzabdeckung in einer Ruhestellung und
- Fig. 3: eine Schnittdarstellung durch die Serviceeinheit mit der Tropfschutzabdeckung in einer Schutzstellung.

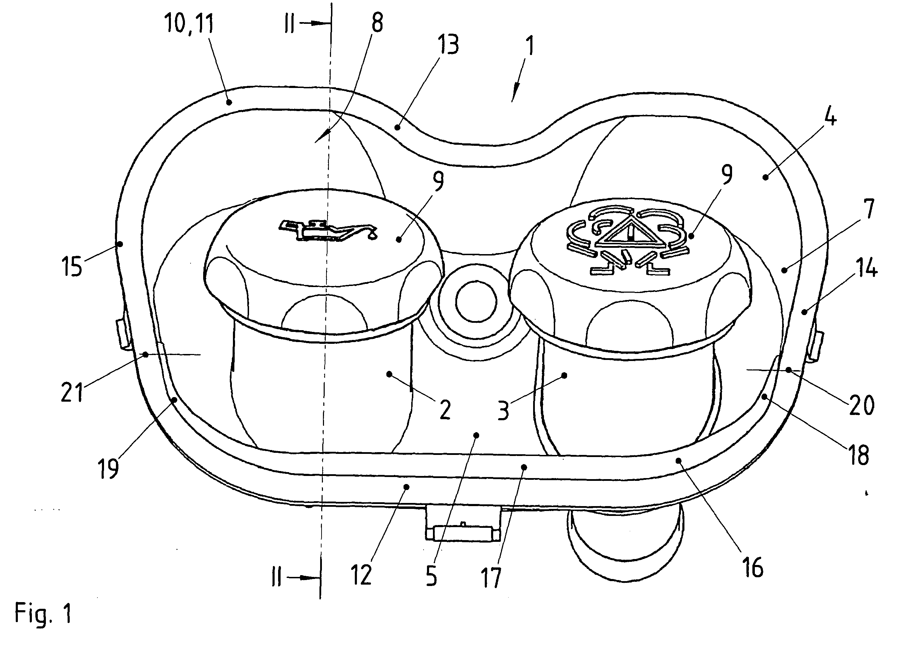

Fig. 1 zeigt eine Serviceeinheit 1 zur Betriebsmittelergänzung von zumindest einem Betriebsmittel für eine Antriebsmaschine (nicht dargestellt) für ein hier nicht gezeigtes Kraftfahrzeug. Derartige Betriebsmittel können insbesondere Flüssigkeiten, wie beispielsweise Kühlmittel, Schmieröl, Hydrauliköl, Kältemittel für eine Klimaanlage oder dergleichen sein. Die Serviceeinheit 1 besitzt demnach zumindest einen Befüllstutzen 2 für die Betriebsmittelergänzung. Im gezeigten Ausführungsbeispiel sind jedoch zwei Befüllstutzen 2 und 3 vorgesehen, von denen der Befüllstutzen 2 für das Einfüllen des Schmiermittels der Antriebsmaschine und der Befüllstutzen 3 zum Befüllen des Kühlkreises für die Antriebsmaschine dient. Selbstverständlich könnten weitere Befüllstutzen der Serviceeinheit zugeordnet sein. Die Befüllstutzen 2 und 3 sind umgeben von einer Auffangschale 4, die einen Schalenboden 5 aufweist, der mit einem Ablauf versehen sein kann, der im Schalenboden 5 selbst oder im Eckbereich 6 zwischen dem Schalenboden 5 und einer Schalenwand 7 oder in der Schalenwand 7 selbst ausgebildet sein kann. Von dem Schalenboden 5 geht die umlaufende, etwa aufrechte Schalenwand 7 aus, die eine innere Randkontur 8 besitzt, die beispielsweise oval, kreisförmig, rechteckig, gegebenenfalls mit abgerundeten Ecken, oder ähnlich ausgeführt ist. In jedem Fall weist die Auffangschale 4 jedoch mit ihrer Schalenwand 7 eine innere Weite auf, die größer als die Befüllstutzen 2, 3 bzw. die darauf aufgesetzten Verschlusskappen 9 ist. Die Schalenwand 7 bildet mit ihrem freien Wandende 10 einen umlaufenden Schalenrand 11 aus, der einen unteren Randabschnitt 12, einen oberen Randabschnitt 13 und zwei seitliche Randabschnitte 14 und 15 umfasst.

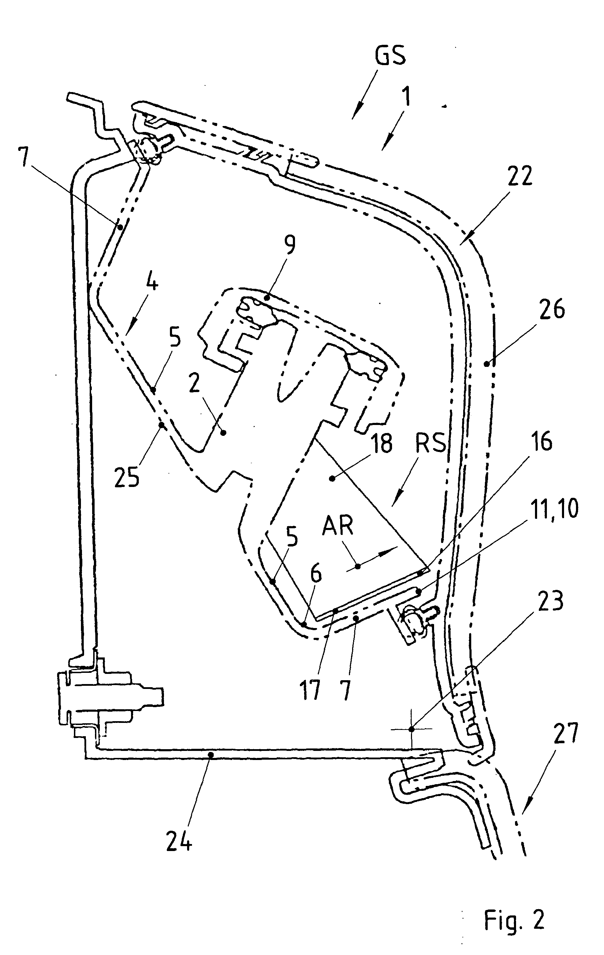

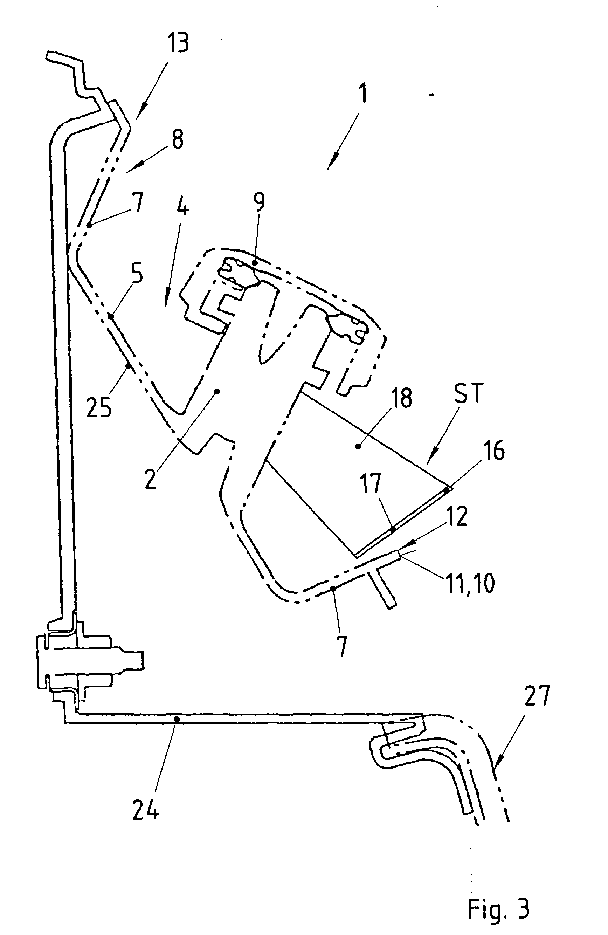

Der Auffangschale 4 ist eine Tropfschutzabdeckung 16 zugeordnet, die - wie insbesondere Fig. 2 zeigt - in einer Ruhestellung RS innerhalb der Auffangschale 4 liegt und - wie Fig. 3 zeigt - in eine ausgefahrene, den Schalenrand 11 überragende Schutzstellung ST verlagert werden kann. In der ausgefahrenen Schutzstellung ST bildet die Tropfschutzabdeckung 16 quasi eine Verlängerung der Schalenwand 7, so dass über einen vergrößerten Schutzbereich ein Auffangen von verschütteter Flüssigkeit bei der Betriebsmittelergänzung über den Befüllstutzen 2 bzw. 3 gegeben ist. Um die Tropfschutzabdeckung 16 aus der Ruhestellung RS in die Schutzstellung ST verlagern zu können, ist sie schwenkbar an der Auffangschale 4 gehalten. Wie aus Fig. 1 hervorgeht, ist die Tropfschutzabdeckung 16 dem unteren Randabschnitt 12 des Schalenrandes 11 zugeordnet und überdies an die innere Randkontur 8 der Schalenwand 7 angepasst. In bevorzugter Ausführungsform ist die Tropfschutzabdeckung 16 etwa U-förmig ausgeführt und besitzt somit eine Basis 17, die dem unteren Randabschnitt 12 zugeordnet ist. Sie umfasst ferner seitliche Arme 18 und 19, die von der Basis 17 ausgehen und sich zumindest teilweise innen entlang der seitlichen Randabschnitte 14 bzw. 15 erstrecken. Im Bereich der freien Enden der Arme 18 bzw. 19 ist die Tropfschutzabdeckung 16 in Schwenkachsen 20, 21 mit der Schalenwand 7 verbunden, so dass die Tropfschutzabdeckung 16 um die Schwenkachsen 20, 21 aus der in Fig. 2 gezeigten Ruhestellung RS in die in Fig. 3 gezeigte Schutzstellung ST aus der Auffangschale 4 herausgeschwenkt werden kann. Um das Herausschwenken der Tropfschutzabdeckung 16 in die Schutzstellung ST zu vereinfachen, ist vorgesehen, dass die Tropfschutzabdeckung 16 in dieser Ausstellrichtung AR, also von der Ruhestellung RS in die Schutzstellung ST, vorgespannt ist, so dass das Herausschwenken automatisch bzw. selbsttätig erfolgt. Dieses Herausschwenken in Ausstellrichtung AR kann selbsttätig insbesondere dann erfolgen, wenn ein die Auffangschale 4 abdeckender Deckel 22 (siehe Fig. 2) der Serviceeinheit 1 zugeordnet und beispielsweise an der Auffangschale 4 angelenkt ist, der in seiner in Fig. 2 dargestellten geschlossenen Stellung GS die Serviceschale 4 und den zugehörigen Befüllstutzen 2 bzw. 3 verschließt. Dieser Deckel 22 ist von der Auffangschale 4 abnehmbar. Es ist insbesondere vorgesehen, den Deckel 22 an seinem unteren Deckelrand in einer Scharnierachse 23 schwenkbar zu lagern, so dass der also insbesondere als Klappe ausgeführte Deckel 22 um diese Achse 23 in eine hier nicht gezeigte Offenstellung geklappt werden kann. Dabei wird die Tropfschutzabdeckung 16 automatisch ausgeklappt, wenn der Deckel 22 in die Öffnungsstellung bewegt wird. Dies ist durch den in Fig. 3 nicht eingezeichneten Deckel 22 verdeutlicht. Wird der Deckel 22 wieder geschlossen, drückt dieser automatisch die Tropfschutzabdeckung 16 wieder zurück in die Ruhestellung RS.

Aus den Fig. 2 bzw. 3 geht noch die tatsächliche Einbaulage der Serviceeinheit 1 im hier nicht gezeigten Kraftfahrzeug hervor. Es ist somit ersichtlich, dass die Serviceeinheit 1 bzw. die Auffangschale 4 etwa aufrecht in dem Fahrzeug angeordnet ist. Beispielsweise erfolgt dies an einer hier nicht gezeigten, etwa vertikal verlaufenden Karosseriewand bzw. Trennwand, die einen Aufnahmeraum für die Antriebsmaschine des Kraftfahrzeugs begrenzt bzw. den Aufnahmeraum und einen Gepäckraum unterteilt, in welchem Gepäckraum die Serviceeinheit 1 liegt. An dieser Karosseriewand wird ein Montagerahmen 24 für die Serviceeinheit befestigt, welcher Montagerahmen die Serviceeinheit 1 trägt. In den Fig. 2 und 3 nicht eingezeichnet ist der sich an der Rückseite 25 fortsetzende Befüllstutzen 2 bzw. 3, der allerdings den Montagerahmen 24 und die dahinterliegende, nicht gezeigte Karosseriewand durchsetzt und so zu der Antriebsmaschine bzw. zu deren Kühlkreis führt. Fig. 2 zeigt ferner, dass die Abdeckung 22 mit einem Verkleidungselement 26, wie beispielsweise einem Teppich oder ähnlichem, belegt sein kann, wie dies beispielsweise auch für eine an den Deckel 22 angrenzende Verkleidung 27 des Gepäckraums vorgesehen sein kann.

## Patentansprüche

1. Serviceeinheit (1) zur Betriebsmittelergänzung an einem Fahrzeug mit einer Antriebsmaschine, mit zumindest einem Befüllstutzen (2, 3) und einer den Befüllstutzen (2, 3) zumindest teilweise umgebenden Auffangschale (4), **dadurch gekennzeichnet, dass** an der Auffangschale (4) eine Tropfschutzabdeckung (16) schwenkbar angebracht ist, welche Tropfschutzabdeckung (16) aus einer innerhalb der Auffangschale (4) liegenden Ruhestellung (RS) in eine zumindest teilweise aus der Auffangschale (4) herausgeschwenkte Schutzstellung (ST) verlagerbar ist.

2. Serviceeinheit nach Anspruch 1, **dadurch gekennzeichnet, dass** die Auffangschale (4) mit einem abnehmbaren Deckel (22) ausgestattet ist, der die Auffangschale (4) verschließt und dabei den Befüllstutzen (2, 3) abdeckt.

3. Serviceeinheit nach Anspruch 1 und 2, **dadurch gekennzeichnet, dass** die Tropfschutzabdeckung (16) beim Abnehmen des Deckels (22) selbsttätig aus der Ruhestellung (RS) in die Schutzstellung (ST) verlagerbar ist.

4. Serviceeinheit nach Anspruch 1, **dadurch gekennzeichnet, dass** die Tropfschutzabdeckung (16) an die innere Randkontur (8) der Auffangschale (4) angepasst ist.

5. Serviceeinheit nach Anspruch 4, **dadurch gekennzeichnet**, **dadurch gekennzeichnet, dass** die Tropfschutzabdeckung (16) etwa U-fömig mit einer Basis (17) und zwei seitlichen Armen (18, 19) ausgeführt ist.

6. Serviceeinheit nach Anspruch 5, **dadurch gekennzeichnet**, die Tropfschutzabdeckung (16) mit ihren seitlichen Armen (18, 19) in Schwenkachsen (20, 21) mit der Auffangschale (4) verbunden ist.

7. Serviceeinheit nach Anspruch 3, **dadurch gekennzeichnet, dass** die Tropfschutzabdeckung (16) in der Ruhestellung (RS) in Ausstellrichtung (AR) in die Schutzstellung (ST) vorgespannt ist.

8. Serviceeinheit nach Anspruch 1 und 2, **dadurch gekennzeichnet, dass** die Auffangschale (4) etwa aufrecht in dem Fahrzeug anordenbar ist, dass der Deckel (22) an einem unteren Randabschnitt (12) der Auffangschale (4) schwenkbar angelenkt ist und dass die Tropfschutzabdeckung (16) dem unteren Randabschnitt (12) zugeordnet ist.
